# EUROPÄISCHE PATENTSCHRIFT

(11) **EP 3 230 561 B1**
(45) Veröffentlichungstag und Bekanntmachung des Hinweises auf die Patenterteilung: **18.11.2020**
(21) Anmeldenummer: 15805188.8
(22) Anmeldetag: 07.12.2015
(51) Int. Cl.: F01L 3/14, B23P 15/00, G01B 21/08, G01B 5/00

(54) **VERFAHREN ZUR HERSTELLUNG EINES HOHLVENTILS**
METHOD FOR MANUFACTURING A HOLLOW VALVE
PROCÉDÉ DE FABRICATION D'UNE SOUPAPE CREUSE

(30) Priorität: 11.12.2014 DE 102014225618
(43) Veröffentlichungstag der Anmeldung: 18.10.2017
(73) Patentinhaber: Mahle International GmbH, 70376 Stuttgart (DE)
(72) Erfinder: KROOS, Peter, 71277 Rutesheim (DE); LUVEN, Christoph, 70376 Stuttgart (DE)
(74) Vertreter: BRP Renaud & Partner mbB Rechtsanwälte Patentanwälte Steuerberater
(86) Internationale Anmeldenummer: PCT/EP2015/078831
(87) Internationale Veröffentlichungsnummer: WO 2016/091808

(56) Entgegenhaltungen:
- DE-A1- 2 943 418
- DE-A1-102010 051 871
- DE-A1-102010 051 871
- JP-A- 2002 331 426
- US-A- 2 577 644
- US-A1- 2002 171 846

## Beschreibung

Die vorliegende Erfindung betrifft ein Verfahren zur Herstellung zumindest eines Hohlventils für den Gasaustausch, insbesondere für Verbrennungsmotoren gemäß dem Oberbegriff des Anspruchs 1.

Aus der DE 10 2010 051 871 A1 ist ein gattungsgemäßes Verfahren zur Herstellung von Hohlventilen für den Gasaustausch, insbesondere für Verbrennungsmotoren bekannt, bei welchem ein Ventilkopf und ein Ventilschaft jeweils als Hohlteil ausgebildet sind. Dabei sind die Hohlräume der ein Ventil bildenden Hohlteile miteinander verbunden und werden wenigstens teilweise durch elektrochemische Metallabtragung in einem elektrolytischen Medium hergestellt, wobei zuerst der Ventilschaft der Länge nach durchgebohrt wird und anschließend der Hohlraum im Ventilkopf als Erweiterungsbohrung quer zur Längsachse des Ventilschafts erzeugt wird. Hierdurch soll insbesondere die Herstellung derartiger Hohlventile vereinfacht werden können.

Die vorliegende Erfindung beschäftigt sich mit dem Problem, für ein Verfahren der gattungsgemäßen Art eine verbesserte oder zumindest alternative Ausführungsform anzugeben, die insbesondere einen hohen Qualitätsanspruch erfüllt. Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Verfahren zur Herstellung zumindest eines Hohlventils für den Gasaustausch mit sämtlichen Teilschritten äußerst genau festzulegen und dadurch die Qualität der Herstellung zu verbessern. Bei dem erfindungsgemäßen Verfahren wird somit zunächst in einem Verfahrensschritt a.) eine Bohrung in einen Ventilschaft und einen Ventilkopf eines Hohlventils eingebracht oder ein derartig vorgebohrtes Hohlventil bereitgestellt. Die Bohrung im Ventilkopf und Ventilschaft verläuft dabei parallel zur Schaftachse. Im sich daran anschließenden Verfahrensschritt b.) wird eine Tiefe t der Bohrung gemessen und das zumindest eine Hohlventil wenigstens einmal gewaschen und dadurch gereinigt. Das Waschen kann dabei vor oder nach der Messung der Tiefe t der Bohrung erfolgen. Anschließend wird im Verfahrensschritt c.) das zumindest eine Hohlventil in einer Halteeinrichtung bereitgestellt und mittels dieser im Verfahrensschritt d.) zu einer zugehörigen Elektrode, mittels welcher die elektrochemische Metallabtragung erfolgt, ausgerichtet. Hierzu fährt die Elektrode im Verfahrensschritt e.) in die Bohrung vom Schaftende her ein. Die zugehörige Elektrode bewegt sich nicht während dem elektrochemischen Metallabtrag. Mittels der Elektrode wird die Bohrung im Bereich des Ventilkopfes im Verfahrensschritt f.) mittels ECM-Verfahren vergrößert und dadurch ein Hohlraum zur Aufnahme eines Kühlmittels in dem Hohlventil geschaffen. Anschließend wird die zugehörige Elektrode im Verfahrensschritt g.) aus dem Hohlventil entfernt und letzteres im Verfahrensschritt h.) gespült bzw. konserviert. Abschließend wird nun im Verfahrensschritt i.) eine Messung der Restwandstärke eines Ventilbodens durchgeführt, um insbesondere die auf den Ventilboden wirkenden hohen Kräfte sicher aufnehmen zu können. Durch die Festlegung der einzelnen Verfahrensschritte a.) bis i.) kann die Herstellungsqualität deutlich gesteigert werden, da der zum Erreichen des optimalen Herstellungsergebnisses erforderliche Prozess in den einzelnen Prozessschritten exakt definiert ist. Mit dem erfindungsgemäßen Verfahren ist es somit möglich, ein Hohlventil nicht nur fertigungstechnisch rationell, sondern zudem auch qualitativ höchstwertig herzustellen.

Bei einer vorteilhaften Weiterbildung der erfindungsgemäßen Lösung erfolgt eine Messung der Tiefe t der Bohrung taktil und/oder mittels Ultraschall. Besonders die Messung mittels Ultraschall stellt dabei ein berührungsfreies und äußerst exaktes Messverfahren dar, wobei selbstverständlich alternativ auch ein Laser eingesetzt werden könnte. Rein theoretisch ist selbstverständlich auch das taktile Messen mittels einer entsprechenden Messlanze möglich und fertigungstechnisch in den Prozess einfach integrierbar.

Bei einer weiteren vorteilhaften Ausführungsform des erfindungsgemäßen Verfahrens erfolgt eine Messung der Restwandstärke des Ventilbodens taktil und/oder mittels Ultraschall. Um die insbesondere auf den Ventilboden auftretenden hohe Kräfte während des Betriebs des Verbrennungsmotors sicher aufnehmen zu können, ist eine Mindestwandstärke des Ventilbodens unbedingt erforderlich, die mit der Bestimmung der Restwandstärke nach dem ECM-Verfahren ermittelt wird. Die ermittelte Restwandstärke muss dabei stets oberhalb der geforderten Mindestwandstärke liegen, um die auftretenden Belastungen sicher aufnehmen zu können.

Zweckmäßig wird die Halteeinrichtung samt Hohlventil kontinuierlich, insbesondere mittels eines Förderbandes oder eines Roboters, bereitgestellt. Hierdurch soll ein kontinuierlicher Herstellungsprozess geschaffen werden, wobei selbstverständlich auch ein Bereitstellen mittels Roboters ein gleichzeitiges Bereitstellen mehrere Hohlventile ermöglicht. Rein theoretisch können diese auch in einer palettenartigen Halteeinrichtung aufgenommen sein, so dass der Roboter eine derartige Palette mit einer Vielzahl solcher Hohlventile gleichzeitig bereitstellen kann.

Bei einer vorteilhaften Weiterbildung der erfindungsgemäßen Lösung erfolgt ein Ausrichten der Halteeinrichtung samt Hohlventil relativ zur zugehörigen Elektrode mittels eines Greifers, der die Bohrung des Hohlventils relativ zu einer Einführphase der Elektrode ausrichtet. Eine derartige Einführphase der Elektrode ermöglicht ein konzentrisches Ausrichten der Elektrode relativ zur Bohrung und damit ein exaktes Positionieren für das ECM-Verfahren. Durch die exakte zentrische Ausrichtung der Elektrode innerhalb der Bohrung kann beim sich anschließend ECM-Verfahren gewährleistet werden, dass eine Abtragung im Ventilkopf zur Herstellung eines Hohlraums in alle Richtungen gleich wirkt und nach Abschluss des ECM-Verfahrens auch entsprechend gleiche Restwandstärken hinterlässt.

Bei einer weiteren vorteilhaften Ausführungsform der erfindungsgemäßen Lösung werden die Halteeinrichtung samt Hohlventil und/oder die zugehörige Elektrode schwimmend gelagert und in diesem schwimmenden Lagerzustand relativ zueinander ausgerichtet. Ist die Halteeinrichtung des Hohlventils relativ zur zugehörigen Elektrode ausgerichtet, wird die schwimmende Lagerung aufgehoben und dadurch die Halteeinrichtung samt Hohlventil relativ zur zugehörigen Elektrode fixiert. Dies ermöglicht es bei der Auslegung des Kathodendurchmessers einen größeren und vorteilhafteren Kathodendurchmesser zu wählen, da keine oder eine deutlich geringere Exzentrizität der Bohrung vorgehalten werden muss. Durch einen größeren Kathodendurchmesser kann eine schnellere Bearbeitung und damit kürzere Prozesszeiten realisiert werden.

Bei einer weiteren vorteilhaften Ausführungsform der erfindungsgemäßen Lösung werden im Verfahrensschritt c.) und d.) zumindest zwei Hohlventile gleichzeitig bereitgestellt. Darüber hinaus können selbstverständlich mehrere Elektroden vorgesehen werden, so dass ein gleichzeitiges Bearbeiten mehrerer Hohlventile und damit eine rationelle Fertigung möglich sind. Neben der rationellen Fertigung können somit mehrere Ventile qualitativ höchstwertig gleichzeitig gefertigt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: ein erfindungsgemäßes Verfahren zur Herstellung zumindest eines Hohlventils mit einzelnen Verfahrensschritten,
- Fig. 2: eine Vorrichtung zur Durchführung des Verfahrens,
- Fig. 3: eine Schnittdarstellung durch ein fertig hergestelltes Hohlventil.

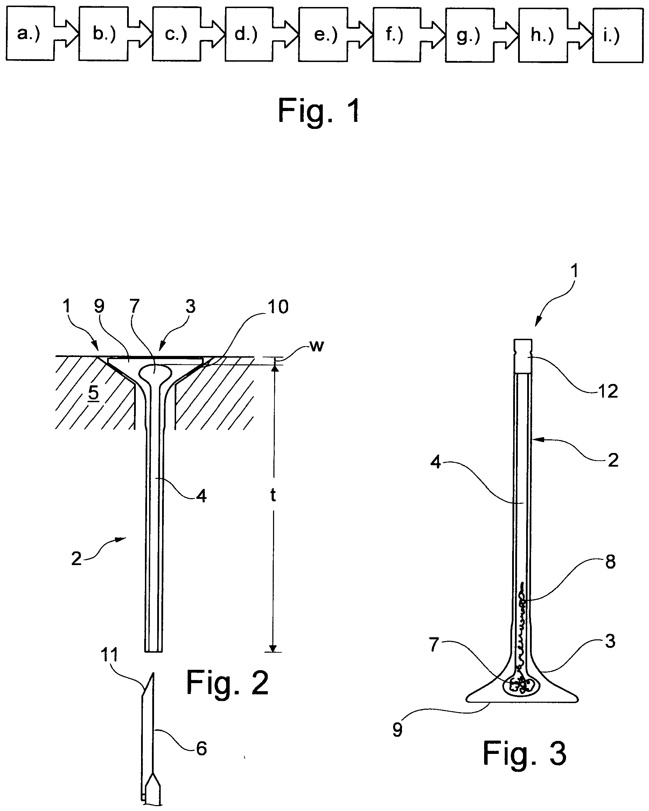

Entsprechend der Fig. 1, weist ein erfindungsgemäßes Verfahren zur Herstellung zumindest eines Hohlventils 1 (vgl. die Fig. 2 und 3) für den Gasaustausch, insbesondere bei Verbrennungsmotoren, insgesamt neun Verfahrensschritte a.) bis i.) auf. Im Verfahrensschritt a.) wird zunächst in einen Ventilschaft 2 und einen Ventilkopf 3 des Hohlventils 1 eine Bohrung 4 eingebracht oder ein in dieser Weise bereits vorgebohrtes Hohlventil bereitgestellt. Im Verfahrensschritt b.) wird anschließend eine Tiefe t der Bohrung 4 gemessen und das zumindest eine Hohlventil 1 wenigstens einmal gewaschen. Das Waschen kann dabei vor oder nach der Messung der Tiefe t der Bohrung 4 erfolgen. Die Tiefe t der Bohrung 4 kann dabei beispielsweise taktil, das heißt also mit einer Messlanze oder einem Messdorn oder aber auch berührungsfrei beispielsweise mittels Ultraschall oder Laser erfolgen. Im darauf folgenden Verfahrensschritt c.) wird das zumindest eine Hohlventil 1 in einer Halteeinrichtung 5 (vgl. Fig. 2) bereitgestellt und im Verfahrensschritt d.) zusammen mit der Halteeinrichtung 5 zu einer zugehörigen Elektrode 6 ausgerichtet. Die Elektrode 6 wird im Verfahrensschritt e.) relativ zum Hohlventil 1 bewegt und in dessen Bohrung 4 eingefahren. Anschließend wird im Verfahrensschritt f.) die Bohrung 4 mittels ECM-Verfahren bearbeitet und insbesondere im Bereich des Ventilkopfes 3 vergrößert. Hierbei wird ein Hohlraum 7 hergestellt, in welchem anschließend ein Kühlmittel 8, beispielsweise Natrium, aufgenommen werden kann. Hat der Hohlraum 7 die vordefinierte Größe erreicht, wird die zugehörige Elektrode 6 im Verfahrensschritt g.) aus dem Hohlventil 1 entfernt und anschließend im Verfahrensschritt h.) das zumindest eine Hohlventil 1 gespült bzw. konserviert. Abschließend erfolgt dann im Verfahrensschritt i.) noch eine Messung der Restwandstärke w eines Ventilbodens 9. Die Messung der Restwandstärke w des Ventilbodens 9 kann dabei ebenfalls taktil und/oder mittels Ultraschall oder Laser erfolgen.

Betrachtet man die Fig. 2, so kann man erkennen, dass die Hohlventile 1 in der Haltereinrichtung 5 kopfüber und zentriert in einer komplementär dazu ausgebildeten Aufnahme 10 gehalten sind. In dieser Halteeinrichtung 5 können selbstverständlich eine Vielzahl derartiger Hohlventile 1 gleichzeitig aufgenommen und gehalten werden und mit dieser gemeinsam und insbesondere kontinuierlich einer zugehörigen Elektrode 6 zugeführt werden. Das Ausrichten der Halteeinrichtung 5 samt Hohlventil 1 relativ zur zugehörigen Elektrode 6 kann auch mittels eines nicht gezeigten Greifers erfolgen, welcher die Bohrung 4 des Hohlventils 1 relativ zu einer Einführfase 11 der Elektrode 6 ausrichtet.

Selbstverständlich ist auch denkbar, dass die Halteeinrichtung 5 samt Hohlventil 1 und/oder die zugehörige Elektrode 6 schwimmend gelagert sind und in diesem schwimmend gelagerten Zustand die Halteeinrichtung 5 samt Hohlventil 1 relativ zur zugehörigen Elektrode 6 ausgerichtet wird. Ist die Ausrichtung erfolgt, wird die schwimmende Lagerung der Halteeinrichtung 5 samt Hohlventil 1 und/oder der zugehörigen Elektrode 6 fixiert, das heißt aufgehoben.

Nach dem Verfahrensschritt h.) kann das wenigstens eine Hohlventil 1 beispielsweise getrocknet und nach dem Verfahrensschritt i.) mit Kühlmittel 8 befüllt und verschlossen werden. Das Verschließen der Bohrung 4 kann dabei beispielsweise durch Aufsetzen eines Schaftendes 12 und Fixieren desselben auf dem Ventilschaft 2 erfolgen.

Mit dem erfindungsgemäßen Verfahren können Hohlventile 1 äußerst exakt und zudem rationell und damit wirtschaftlich hergestellt werden.

## Patentansprüche

1. Verfahren zur Herstellung zumindest eines Hohlventils (1) für den Gasaustausch, insbesondere für Verbrennungsmotoren, wobei
a.) in einen Ventilschaft (2) und einen Ventilkopf (3) eine Bohrung (4) eingebracht wird,
b.) eine Messung der Tiefe (t) der Bohrung (4) erfolgt und das zumindest eine Hohlventil (1) wenigstens einmal gewaschen wird,
c.) das zumindest eine Hohlventil (1) in einer Halteeinrichtung (5) bereitgestellt wird,
d.) die Halteeinrichtung (5) samt Hohlventil (1) zu einer zugehörigen Elektrode (6) ausgerichtet wird,
e.) die zugehörige Elektrode (6) relativ zum Hohlventil (1) bewegt und in dessen Bohrung (4) eingefahren wird,
f.) die Bohrung (4) mittels ECM-Verfahren bearbeitet, insbesondere im Bereich des Ventilkopfes (3) vergrößert, wird,
g.) die zugehörige Elektrode (6) aus dem Hohlventil (1) entfernt wird,
h.) das zumindest eine Hohlventil (1) gespült und/oder konserviert wird,
i.) eine Messung der Restwandstärke (w) eines Ventilbodens (9) erfolgt.

2. Verfahren nach Anspruch 1,
**dadurch gekennzeichnet,**
**dass** eine Messung der Tiefe (t) der Bohrung (4) taktil und/oder mittels Ultraschall oder Laser erfolgt.

3. Verfahren nach Anspruch 1 oder 2,
**dadurch gekennzeichnet,**
**dass** eine Messung der Restwandstärke (w) des Ventilbodens (9) taktil und/oder mittels Ultraschall oder Laser erfolgt.

4. Verfahren nach einem der Ansprüche 1 bis 3,
**dadurch gekennzeichnet,**
**dass** die Halteeinrichtung (5) samt Hohlventil (1) kontinuierlich, insbesondere mittels eines Förderbandes oder eines Roboters, bereitgestellt wird.

5. Verfahren nach einem der Ansprüche 1 bis 4,
**dadurch gekennzeichnet,**
**dass** das Ausrichten der Halteeinrichtung (5) samt Hohlventil (1) relativ zur zugehörigen Elektrode (6) mittels eines Greifers erfolgt, der die Bohrung (4) des Hohlventils (1) relativ zu einer Einführfase (11) der Elektrode (6) ausgerichtet.

6. Verfahren nach einem der Ansprüche 1 bis 5,
**dadurch gekennzeichnet,**
**dass** das zumindest eine Hohlventil (1) kopfüber und zentriert in einer komplementär dazu ausgebildeten Aufnahme (10) der Halteeinrichtung (5) gehalten wird.

7. Verfahren nach einem der Ansprüche 1 bis 6,
**dadurch gekennzeichnet,**
- **dass** die Halteeinrichtung (5) samt Hohlventil (1) und/oder die zugehörige Elektrode (5) schwimmend gelagert werden,
- **dass** die Halteeinrichtung (5) samt Hohlventil (1) relativ zur zugehörigen Elektrode (6) ausgerichtet wird,
- **dass** die schwimmende Lagerung der Halteeinrichtung (5) samt Hohlventil (1) und/oder der zugehörigen Elektrode (6) fixiert wird.

8. Verfahren nach einem der Ansprüche 1 bis 7,
**dadurch gekennzeichnet,**
**dass** das wenigstens eine Hohlventil (1) nach dem Verfahrensschritt h.) getrocknet und nach dem Verfahrensschritt i.) mit Kühlmittel (8), insbesondere mit Natrium, befüllt und verschlossen wird.

9. Verfahren nach Anspruch 8,
**dadurch gekennzeichnet,**
**dass** das Verschließen der Bohrung (4) durch Aufsetzen eines Schaftendes (12) erfolgt.

10. Verfahren nach einem der Ansprüche 1 bis 9,
**dadurch gekennzeichnet,**
**dass** im Verfahrensschritt c.) und d.) mindestens zwei Hohlventile (1) gleichzeitig bereitgestellt werden.

## Claims

1. Method for producing at least one hollow valve (1) for gas exchange, in particular for internal combustion engines, wherein
a) a bore (4) is introduced into a valve shaft (2) and into a valve head (3),
b) the depth (t) of the bore (4) is measured and the at least one hollow valve (1) is washed at least once,
c) the at least one hollow valve (1) is provided in a holding device (5),
d) the holding device (5) together with the hollow valve (1) is oriented with respect to an associated electrode (6),
e) the associated electrode (6) is moved in relation to the hollow valve (1) and is inserted into the bore (4) of the hollow valve,
f) the bore (4) is processed by means of ECM processes, in particular enlarged in the region of the valve head (3),
g) the associated electrode (6) is removed from the hollow valve (1),
h) the at least one hollow valve (1) is rinsed and/or preserved,
i) a measurement of the remaining wall thickness (w) of a valve bottom (9) is performed.

2. Method according to claim 1,
**characterised in**
**that** a measurement of the depth (t) of the bore (4) is performed in a tactile manner and/or by means of ultrasound or laser.

3. Method according to claim 1 or 2,
**characterised in**
**that** a measurement of the remaining wall thickness (w) of the valve bottom (9) is performed in a tactile manner and/or by means of ultrasound or laser.

4. Method according to any of claims 1 to 3,
**characterised in**
**that** the holding device (5) together with the hollow valve (1) is provided continuously, in particular by means of a conveyor belt or a robot.

5. Method according to any of claims 1 to 4,
**characterised in**
**that** the orientation of the holding device (5) together with the hollow valve (1) in relation to the associated electrode (6) is performed by means of a gripper that orientates the bore (4) of the hollow valve (1) in relation to an insertion chamfer (11) of the electrode (6).

6. Method according to any of claims 1 to 5,
**characterised in**
**that** the at least one hollow valve (1) is held head first and in a centred manner in a receptacle (10) of the holding device (5) constructed in a complementary manner thereto.

7. Method according to any of claims 1 to 6,
**characterised in**
- **that** the holding device (5) together with the hollow valve (1) and/or the associated electrode (5) are mounted in a floating manner,
- **that** the holding device (5) together with the hollow valve (1) is oriented in relation to the associated electrode (6),
- **that** the floating mounting of the holding device (5) together with the hollow valve (1) and/or the associated electrode (6) is fixed.

8. Method according to claim any of claims 1 to 7,
**characterised in**
**that** the at least one hollow valve (1) is dried after method step h) and filled with coolant (8), in particular with sodium, and closed, after method step i).

9. Method according to claim 8,
**characterised in**
**that** the closing of the bore (4) is performed by placing a shaft end (12) thereon.

10. Method according to any of claims 1 to 9,
**characterised in**
**that** at least two hollow valves (1) are simultaneously provided in method step c) and d).

## Revendications

1. Procédé de fabrication d'au moins une soupape creuse (1) pour l'échange de gaz, en particulier pour des moteurs à combustion, dans lequel
a.) un alésage (4) est réalisé dans une queue de soupape (2) et une tête de soupape (3),
b.) une mesure de la profondeur (t) de l'alésage (4) est effectuée et l'au moins une soupape creuse (1) est lavée au moins une fois,
c.) l'au moins une soupape creuse (1) est prévue dans un dispositif de maintien (5),
d.) le dispositif de maintien (5) comprenant la soupape creuse (1) est aligné avec une électrode associée (6),
e.) l'électrode associée (6) est déplacée par rapport à la soupape creuse (1) et est insérée dans son alésage (4),
f.) l'alésage (4) est usiné au moyen d'un procédé UEC, en particulier agrandi dans la zone de la tête de soupape (3),
g.) l'électrode associée (6) est retirée de la soupape creuse (1),
h.) l'au moins une soupape creuse (1) est rincée et/ou conservée,
i.) une mesure de l'épaisseur résiduelle de la paroi (w) d'un plateau de soupape (9) est effectuée.

2. Procédé selon la revendication 1,
**caractérisé en ce**
**qu'**une mesure de la profondeur (t) de l'alésage (4) est effectuée de manière tactile et/ou au moyen d'ultrasons ou de laser.

3. Procédé selon la revendication 1 ou 2,
**caractérisé en ce**
**qu'**une mesure de l'épaisseur résiduelle de la paroi (w) du plateau de soupape (9) est effectuée de manière tactile et/ou au moyen d'ultrasons ou de laser.

4. Procédé selon l'une quelconque des revendications 1 à 3,
**caractérisé en ce**
**que** le dispositif de maintien (5) ainsi que la soupape creuse (1) sont prévus en continu, en particulier au moyen d'une bande transporteuse ou d'un robot.

5. Procédé selon l'une quelconque des revendications 1 à 4,
**caractérisé en ce**
**que** l'alignement du dispositif de maintien (5) ainsi que de la soupape creuse (1) par rapport à l'électrode associée (6) est effectué au moyen d'un grappin qui aligne l'alésage (4) de la soupape creuse (1) par rapport à un chanfrein d'introduction (11) de l'électrode (6).

6. Procédé selon l'une quelconque des revendications 1 à 5,
caractérisé en ce
en ce que l'au moins une soupape creuse (1) est maintenue à l'envers et centrée dans un logement complémentaire (10) du dispositif de maintien (5).

7. Procédé selon l'une quelconque des revendications 1 à 6,
**caractérisé en ce**
- **que** le dispositif de maintien (5) ainsi que la soupape creuse (1) et/ou l'électrode associée (5) sont montés de manière flottante,
- **que** le dispositif de maintien (5) ainsi que la soupape creuse (1) sont alignés par rapport à l'électrode associée (6),
- **que** le montage flottant du dispositif de maintien (5) avec la soupape creuse (1) et/ou l'électrode associée (6) est fixé.

8. Procédé selon l'une quelconque des revendications 1 à 7,
**caractérisé en ce**
**que** l'au moins une soupape creuse (1) est séchée selon l'étape h.) du procédé et est remplie de liquide de refroidissement (8), en particulier de sodium, et fermée selon l'étape i.) du procédé.

9. Procédé selon la revendication 8,
**caractérisé en ce**
**que** la fermeture de l'alésage (4) est entraînée par l'installation d'une extrémité de queue (12).

10. Procédé selon l'une quelconque des revendications 1 à 9,
**caractérisé en ce**
**qu'**au moins deux soupapes creuses (1) sont prévues simultanément dans les étapes c.) et d.) du procédé.
